Europäisches Patentamt

European Patent Office

Office européen des brevets

(11) Veröffentlichungsnummer: **0 116 664**
A1

(12) # EUROPÄISCHE PATENTANMELDUNG

(21) Anmeldenummer: 83101612.6

(22) Anmeldetag: 19.02.83

(51) Int. Cl.³: **B 23 K 9/18**
B 23 K 35/30

(43) Veröffentlichungstag der Anmeldung:
29.08.84 Patentblatt 84/35

(84) Benannte Vertragsstaaten:
AT BE CH DE FR GB IT LI LU NL SE

(71) Anmelder: Schweissindustrie Oerlikon Bührle AG
Birchstrasse 230
CH-8050 Zürich(CH)

(72) Erfinder: Scholz, Erhard
Dr. Semmelweis Strasse
D-6719 Eisenberg/Pfalz(DE)

(72) Erfinder: Heimann, Edmund
Bahnhofstrasse 68
CH-Dietlikon(CH)

(72) Erfinder: Baach, Hans, Dr.
Grafschaftstrasse 80
CH-8172 Niederglatt(CH)

(74) Vertreter: Frei, Alexandra Sarah et al,
Egli Patentanwälte Horneggstrasse 4
CH-8008 Zürich(CH)

(54) Verfahren zur Unterpulverschweissung im Mehrdrahtsystem.

(57) Im neuen Unterpulver-Mehrdrahtschweiss-System sind jeweils nur ein oder zwei der verwendeten Schweissdrähte über-mikrolegierte Drähte. Die andern Drähte sind un- oder niedriglegierte, handelsübliche Massivdrähte.

Durch das neue Verfahren wird ein Schweissgut geschaffen, welches unerwartet hohe Zähigkeitswerte zeigt. Die neue Schweissung als solche gestaltet sich zudem ökonomischer.

Das neue Mehrdrahtschweiss-System wird angewendet auf Ein- oder Mehrlagen-Schweissungen.

Dreidraht - Schweissung

FIG.5

EP 0 116 664 A1

Croydon Printing Company Ltd

0116664

Verfahren zur Unterpulverschweissung im Mehrdraht-System

---

Die Erfindung bezieht sich auf ein neues Verfahren zur Unterpulverschweissung im Mehrdraht-System.

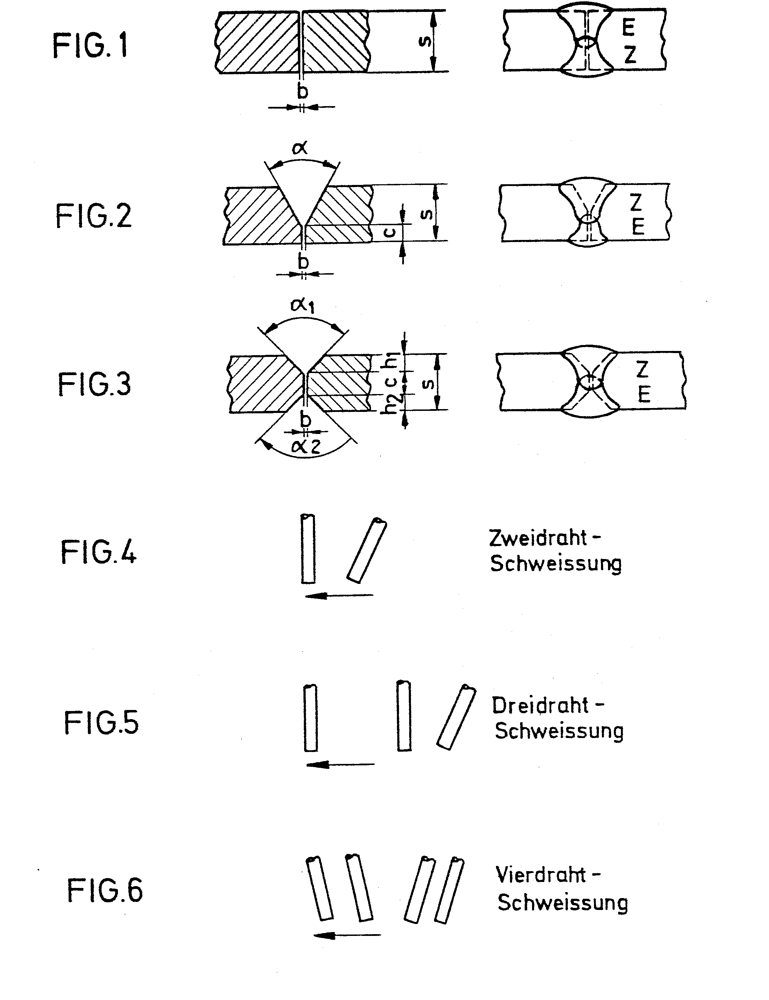

Sehr viele Schweissungen werden in der sogenannten Zweilagentechnik ausgeführt. Es ist dies die wirtschaftlichste Methode, um mit Hilfe der Unterpulverschweissung Bleche in einem Blechdickenbereich von 3 - 40 mm zu verbinden. Die Nahtvorbereitung ist sehr einfach, es genügt in den meisten Fällen ein einfacher Brennschnitt. Im oberen Dickenbereich von etwa 16 - 25 mm wird üblicherweise die Schweissung mit Hilfe der sogenannten Y-Naht durchgeführt, was die Anpassung der Schweissdaten an die Eindringtiefe des Lichtbogens erleichtert. Eine dritte, mögliche Schweissnaht - vor allem für Materialien mit hohen Blechdicken - ist die Doppel-Y-Naht. Die bekanntesten und wirtschaftlich wichtigsten Anwendungsfälle dieser Art von Unterpulverschweissungen liegen im Schiffsbau und in der Herstellung von Grossrohren für den Transport von Gasen und Flüssigkeiten. In den letzten Jahren ist insbesondere die Herstellung von Grossrohren für den Transport von Erdgas und Erdöl in den Vordergrund getreten. Siehe dazu Figuren 1 bis 3, in denen Unter-Pulverschweissungen dargestellt sind.

Figur 1 zeigt dabei eine I-Naht, Figur 2 eine Y-Naht und
Figur 3 eine Doppel-Y-Naht (symmetrisch) mit den entsprechenden Schweisslagen; E steht darin für die erste,
Z für die zweite Schweisslage.

Derart verschweisste Rohre werden zur Zeit in Gegenden
verlegt, die sich durch besonders niedrige Temperaturen während des Winters auszeichnen und aus diesem
Grund werden an das Rohrmaterial und an die Schweissnähte in diesen Rohren besonders hohe Ansprüche hinsichtlich der Zähigkeit bei tiefen Temperaturen gestellt. Solche Zähigkeitsanforderungen werden üblicherweise in Kerbschlagwerten, ermittelt mit Ch.V.-Proben
bei Temperaturen zwischen $-20^{\circ}C$ und $-60^{\circ}C$, ausgedrückt.

Es ist erst in den 70er Jahren gelungen, Einlagen- und
Zweilagenschweissungen, wie sie zur Herstellung solcher
Rohre benutzt werden, in der notwendigen Güte herzustellen. Vorher enthielten solche Nähte ein viel zu
grobes Mikrogefüge, als dass gute Kerbschlagwerte erwartet werden konnten.

Die Entdeckung der Wirkungsweise von Mikrolegierungen,
insbesondere der Wirkungsmechanik geringer Gehalte an
Ti und B in Kombination mit möglichst geringen Gehalten
an Sauerstoff und Stickstoff eröffnete die Möglichkeit,
Einlagen- und Zweilagennähte grösserer Dimension mit
sehr hohen Zähigkeitswerten bei tiefen Temperaturen
herzustellen. Diese Mikrolegierungselemente bewirkten
beim Erstarrungs- und Abkühlvorgang der Schweissnaht
die Ausbildung eines hohen Anteils an nadeligem Ferrit
(acicular ferrite) anstelle des groben und spröden
proeutektoiden Ferrits. Der nadelige Ferrit ist für
hohe Zähigkeiten bei tiefen Temperaturen verantwortlich
und die Voraussetzung dafür.

Ueber dieses sehr wichtige Teilgebiet der Schweissmetallurgie ist in den letzten 13 Jahren eine grosse
Anzahl Veröffentlichungen erschienen und auch das
IIW (International Institute of Welding) hat sich
in ausgedehnten Versuchen mit diesem Phänomen befasst.

Solche Schweissungen gehören heute zum Stand der
Technik (siehe auch CH-Patentanmeldung Nr. 9592/80).

In der Praxis wird das Zulegieren von Titan und Bor
in der Unterpulverschweissung nach verschiedenen
Methoden durchgeführt:

a) Legieren des oder der Massivdrähte unter Verwendung
   eines Schweisspulvers, das geringe Sauerstoff-
   und Stickstoffwerte ergibt.

b) Legieren eines Fülldrahtes, der dann wie ein Massivdraht zur Unterpulverschweissung benutzt wird.

c) Benutzung eines Schweisspulvers, das einen Teil oder
   die Gesamtmenge der benötigten Mikrolegierungselemente
   während des Schweissprozesses dem Schweissgut zulegiert, unter Verwendung eines handelsüblichen,
   genormten Schweissdrahtes ohne Mikrolegierungselemente.

Die Anmelderin fertigt schon seit mehreren Jahren Fülldrähte nach Verfahren b), da dieses nach ihrer Ueberzeugung die exakteste Methode darstellt, um die sehr
geringen Gehalte an Mikrolegierungselementen metallurgisch
wirksam dem Schweissprozess zuzuführen (siehe auch
CH-Patentanmeldung 9592/80).

Bei der Herstellung von Pipe-Line-Rohren nach dem
Längsnaht- oder Spiralnaht-System wird in zunehmendem Masse die sogenannte Mehrdrahtschweissung eingesetzt. Darunter versteht man den Einsatz von mehreren hintereinander geschalteten gleichen Drähten bei
der Unterpulverschweissung. Ueblicherweise führt dabei jeder Einzeldraht seinen eigenen Lichtbogen,
wobei aber das Schweissbad aller beteiligten Drähte
in ein einziges Bad übergehen. Eine solche Anordnung
anstelle der Verwendung eines einzelnen, dickeren
Drahtes erlaubt die Anwendung höherer Schweissgeschwindigkeiten, wobei als Faustformel bei zwei Drähten die mögliche Schweissgeschwindigkeit verdoppelt,
bei 3 Drähten verdreifacht und bei 4 Drähten vervierfacht wird. Die Verwendung von mehr als 4 Drähten
ist nach dem heutigen Stand der Technik nicht üblich.

Nach der zur Zeit gebräuchlichen Methode werden also
1 bis 4 gleiche mikrolegierte Fülldrähte oder Massivdrähte nach der beigefügten Skizze zum Schweissen
von Ein- und Zweilagenschweissungen benutzt. Dieses
Verfahren ist relativ teuer, da die Herstellung
von mikrolegierten Fülldrähten oder Massivdrähten
wesentlich teurer ist als die Herstellung handelsüblicher
normaler Unterpulver-Schweissdrähte. Unter dem Aspekt
der wesentlich höheren Gütewerte der Schweissnähte
musste bisher der hohe Preis in Kauf genommen werden.

Gemäss der Erfindung werden nun die Mikrolegierungselemente beim Mehrdraht-Unterpulverschweissen nur über
einen Draht, beim Vierdrahtschweissverfahren höchstens
über zwei Drähte zugeführt, die restlichen, für die Mehrdrahtschweissung benutzten Drähte werden als
billige, handelsübliche Drähte zugeführt.

Ein solches Verfahren ist wesentlich wirtschaftlicher,
da die Herstellungskosten eines unlegierten, für die
Unterpulverschweissung geeigneten Massivdrahtes
etwa 30 % der Kosten eines mikrolegierten Fülldrahtes
ausmachen, was bei einer Vierdrahtschweissung zu einer
beträchtlichen Senkung der Drahtkosten führen würde.

Die bei uns durchgeführten Versuche haben zudem
überraschenderweise zu dem Resultat geführt, dass
die Wirkungsweise der Mikrolegierungselemente offensichtlich durch die besondere Art der konzentrierten
Injektion in das Schweissgut noch verstärkt wird. Die
erzielten Kerbschlagwerte liegen jedenfalls beträchtlich höher als diejenigen von Schweissungen mit
gleichen, mikrolegierten Schweissdrähten und das
Mikrogefüge der Schweissungen weist einen höheren
Gehalt an Nadelferrit auf als wenn die Schweissung
mittels einer Mehrdrahtschweissung mit 3 normal legierten Ti- und B- enthaltenden Fülldrähten geschweisst
worden ist.

Bei der Ausführung des erfindungsgemässen Schweissverfahrens ist die Position des mikrolegierten Fülldrahtes von einiger Bedeutung. Das günstigste Ergebnis
wird erzielt, wenn die Zuführung der überlegierten
Fülldrahtelektrode über den ersten Schweisskopf erfolgt.

Der Grund für die hierbei erhöhte metallurgische
Wirksamkeit der Mikrolegierungselemente besteht
vermutlich darin, dass die wirksamen Legierungselemente vom Kavernengrund (Schmelzlinie Grundwerkstoff/Schweissgut) aufsteigen und somit den
besonders kritischen aufgeschmolzenen Grundwerkstoff (anteilmässig 50 bis 80 % des gesamten Schweissgutes) in der ersten Schmelzphase besonders intensiv
metallurgisch beeinflussen. Der wichtigste Vorgang
bei dieser Art von Schweissung ist ja das Abbinden
des freien Stickstoffs mittels der Spuren von
metallischem Bor. Interessant ist in diesem Zusammenhang, dass ein solchermassen behandeltes Schweissgut
offensichtlich ziemlich unempfindlich ist gegenüber
seinem Sauerstoffgehalt. Es erlaubt demnach sogar
den Einsatz sogenannter neutraler oder zumindest
weniger basischer Schweisspulver, die ein Schweissgut mit höherem Sauerstoffgehalt ergeben, dafür
aber üblicherweise eine höhere Schweissgeschwindigkeit
und höhere Schweissströme und damit höhere Abschmelzleistungen erlauben.

Welche Resultate mit solchen überlegierten Fülldrähten zu erzielen sind, soll das nachfolgende Beispiel erläutern:

An einem Rohrstahl X 60 mod. nach API wurden 5 Schweissungen nach dem UP-Verfahren durchgeführt, wobei jeweils
in zwei Lagen geschweisst wurde. Die Blechstärke betrug
19,1 mm.

- 7 -                                    0116664

Zum Einsatz kamen folgende Zusatzdrähte, deren reines Schweissgut folgende Zusammensetzung aufweist:

Draht A:    Fluxocord 35.22      (für 1 - 4 Drahtschweissung

                                  nach klassischer Methode ge-

            C     0,05 %          mäss dem Stand der Technik;

            Mn    1,2  %          normaler mikrolegierter Füll-

            Si    0,2  %          draht).

            Cr    0,4  %

            Mo    0,2  %

            Ti    200  ppm

            B      40  ppm


Draht B:    Fluxocord 35.22-2 D   (für 2-Draht-Tandemschweissung

                                  oder 4-Drahtschweissung gemäss

            C     0,05 %          erfindungsgem. Verfahren)

            Mn    1,9  %

            Si    0,3  %

            Cr    0,8  %

            Mo    0,4  %

            Ti    400  ppm

            B      80  ppm


Draht C:    Fluxocord 35.22-3 D   (für 3-Drahtschweissung gemäss

                                  erfindungsgem. Verfahren)

            C     0,05  %

            Mn    2,6   %

            Si    0,4   %

            Cr    1,2   %

            Mo    0,6   %

            Ti    600   ppm

            B     120   ppm

Draht D:     Handelsüblicher S1-Draht


            C   0,07 %

            Mn  0,5  %

            Si  0,1  %  (max.)



Die Schweissdaten der fünf Schweissungen wurden
wie folgt gewählt:


Schweissung 1)   3 x Draht A + Schweisspulver OP 122

(Dreidraht-      Draht 1:   810 A / 30 V
Schweissung
                 Draht 2:   790 A / 33 V
mit 3 normal
mikrolegierten   Draht 3:   680 A / 34 V
Fülldrähten)

                 Schweissgeschwindigkeit: 125 cm / Min.


                 Kerbschlagzähigkeit (in Joule nach ISO-V
                 bei -20$^{\circ}$C):

                     42  /   48  /   48



Schweissung 2)   3 x Draht A + Schweisspulver OP 121

(Dreidraht-      Draht 1:   810 A / 30 V
Schweissung
                 Draht 2:   790 A / 33 V
mit 3 normal
mikrolegierten   Draht 3:   680 A / 34 V
Fülldrähten)

                 Schweissgeschwindigkeit: 125 cm/Min.


                 Kerbschlagzähigkeit (in Joule nach ISO-V
                 bei -20$^{\circ}$C):

                     37  /   40  /   74

- 9 -

0116664

Schweissung 3)

Schweisspulver OP 121 TT

(Vierdrahtschweissung mit
2 überlegierten Fülldrähten
Typ B und 2 Massivdrähten
Typ D)

Draht 1: (B)   700 A / 32 V

Draht 2: (D)   650 A / 32 V

Draht 3: (B)   600 A / 35 V

Draht 4: (D)   550 A / 33 V

Schweissgeschwindigkeit: 130 cm/Min.

Kerbschlagzähigkeit (Joule ISO-V bei
$-20^{\circ}C$):

95  /  108  /  116

Schweissung 4)

Schweisspulver OP 121 TT

(3-Drahtschweissung mit OP
121 TT und überlegiertem
Fülldraht Typ C und 2 unlegierten Massivdrähten
Typ D)

Draht 1: (C)   810 A / 30 V

Draht 2: (D)   790 A / 33 V

Draht 3: (D)   680 A / 34 V

Schweissgeschwindigkeit: 125 cm/Min.

Kerbschlagzähigkeit (in Joule nach
ISO-V bei $-20^{\circ}C$):

96  /  100 /  102

Schweissung 5)

| (Dreidrahtschweissung mit | Draht 1: (C) 810 A / 30 V |
| OP 122 und überlegiertem | Draht 2: (D) 790 A / 33 V |
| Fülldraht Typ C und 2 un- | Draht 3: (D) 680 A / 34 V |
| legierten Massivdrähten Typ D) | |

Schweissgeschwindigkeit: 125 cm/Min.

Kerbschlagzähigkeit (in Joule nach ISO-V bei $-20^{\circ}$C):

154 / 158 / 160

Aus den Resultaten der oben aufgeführten 5 Schweissungen lassen sich folgende Rückschlüsse ziehen:

1) Der Standardtyp Fluxocord 35,22 im Mehrdrahtverfahren eingesetzt, ergibt im Vergleich zur Kombination "überlegierter Typ + unlegierte Massivdrähte" ein ungünstigeres Resultat. Die erfindungsgemässe Kombination ergibt also einen deutlichen technischen Fortschritt.

2) Die Verwendung der Pulver OP 121 TT (Basizitätsgrad 3) und OP 122 (Basizitätsgrad 2) ergibt keinen Hinweis darauf, dass höhere Basizität und damit niederer Sauerstoffgehalt des Schweissgutes von Vorteil ist.

3) Die Anwendung der überlegierten Fülldrähte B
   und C kann in vielfältiger Weise geschehen.
   Kombination 1:2 oder 2:2 sind möglich.
   (Ein erster Versuch mit einer Kombination
   1:3 bei der Vierdrahtschweissung ergab
   ebenfalls gute Resultate).

In den Figuren 4 bis 6 sind mögliche Anordnungen
für erfindungsgemässe Schweissverfahren dargestellt.

Die Figur 4 zeigt dabei eine Tandemschweissung
(Zweidrahtschweissung), die Figur 5 eine Dreidrahtschweissung und die Figur 6 eine Vierdrahtschweissung).

Bei den Anordnungen gemäss Figuren 4 bis 6 können
jeweils der erste Schweissdraht (im Sinne der
Schweissrichtung) ein mikro-überlegierter Draht
sein; in Figur 6 kann auch der dritte Draht ein
solcher sein.

Patentansprüche

1. Verfahren zur Unterpulverschweissung im Mehrdraht-System, dadurch gekennzeichnet, dass

   jeweils nur ein oder zwei der verwendeten Schweissdrähte mikrolegierte Drähte sind und dass

   die andern Drähte un- oder niedrig-legierte Massivdrähte sind.

2. Verfahren gemäss Patentanspruch 1, dadurch gekennzeichnet, dass das Verhältnis der Anzahl mikrolegierter Schweissdrähte zu un- oder niedrig-legierten Massivdrähten 1:1, 1:2, 1:3, 2:2 oder 2:1 ist.

3. Verfahren gemäss einem der Patentansprüche 1 und 2, dadurch gekennzeichnet, dass der mikrolegierte Schweissdraht ein Massivdraht oder ein entsprechend legierter Fülldraht ist.

0116664

4. Verfahren gemäss einem der Patentansprüche 1 bis 3, dadurch gekennzeichnet, dass das verwendete Schweisspulver analysenneutral ist oder einen Teil der notwendigen Legierungselemente zulegiert enthält.

5. Anwendung des Verfahrens gemäss Patentanspruch 1 zur Erlangung eines Schweissgutes mit hohem Anteil an nadeligem Ferrit (acicular ferrite) im Gefüge.

6. Anwendung gemäss Patentanspruch 5, dadurch gekennzeichnet, dass der flächenmässige Anteil an nadeligem Ferrit $\geqslant$ 60 % beträgt.

7. Anwendung gemäss Patentanspruch 5 in Ein-, Zwei- oder Mehrlagen-Schweissungen.

Patentansprüche

1. Verfahren zur Unterpulverschweissung im Mehrdraht-
   System, dadurch gekennzeichnet, dass weniger als
   die gesamte Anzahl der verwendeten Schweissdrähte
   übermikrolegierte Drähte sind und dass die restlichen dieser Anzahl un- oder niedrig-legierte
   Drähte sind.

2. Verfahren gemäss Patentanspruch 1, dadurch gekennzeichnet, dass die Anzahl der Schweissdrähte ein
   Verhältnis von übermikrolegierten Schweissdrähten
   mit einem entsprechenden Legierungsfaktor von 2,
   3, 4, 2 oder 1.5 zu un- oder niedrig-legierten
   Drähten 1:1, 1:2, 1:3, 2:2 oder 2:1 aufweist.

3. Verfahren gemäss einem der Patentansprüche 1 und 2,
   dadurch gekennzeichnet, dass der übermikrolegierte
   Schweissdraht ein Massivdraht oder ein mit entsprechenden Mengen Legierungsbestandteilen versehener
   Fülldraht ist.

FIG.1

FIG.2

FIG.3

FIG.4 — Zweidraht-Schweissung

FIG.5 — Dreidraht-Schweissung

FIG.6 — Vierdraht-Schweissung

0116664

Europäisches
Patentamt

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int Cl ³) |
|-----------|---|---|---|
| X | GB-A-2 084 501 (NIPPON STEEL) <br> * Seite 4, Zeilen 34-37, 44-49 * <br> --- | 1-3 | B 23 K 9/18 <br> B 23 K 35/30 |
| D,A | GB-A-2 090 615 (OERLIKON) <br> --- | | |
| A | DE-A-2 326 442 (KUNTZE) <br> ----- | | |

RECHERCHIERTE
SACHGEBIETE (Int. Cl ³)

B 23 K

Der vorliegende Recherchenbericht wurde für alle Patentansprüche erstellt.

| Recherchenort | Abschlußdatum der Recherche | Prüfer |
|---|---|---|
| DEN HAAG | 12-10-1983 | HOORNAERT W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
............
& : Mitglied der gleichen Patentfamilie, übereinstimmendes Dokument

EPA Form 1503 03 82